# EUROPEAN PATENT APPLICATION

(11) **EP 2 385 450 A1**
(43) Date of publication of application: **09.11.2011**
(21) Application number: 10162242.1
(22) Date of filing: 07.05.2010
(51) Int. Cl.: G06F 3/048

(54) **Portable electronic device and method of controlling same**

(71) Applicant: RESEARCH IN MOTION LIMITED, Waterloo, Ontario N2L 3W8 (CA)
(72) Inventor: Martin, Daryl, Joseph, Waterloo Ontario N2L 5R9 (CA)
(74) Representative: MERH-IP Matias Erny Reichl Hoffmann

(57) **Abstract**

A method includes detecting a received gesture on a touch-sensitive display, comparing the received gesture to a predefined gesture, if an option to provide gesture feedback is enabled, providing gesture feedback comprising rendering a representation of the predefined gesture on the touch-sensitive display.

## Description

### FIELD OF TECHNOLOGY

The present disclosure relates to portable electronic devices including touch-sensitive displays and the control of such portable electronic devices.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in electronic devices with touch-sensitive displays are desirable.

### SUMMARY

According to one aspect, a method is provided. The method includes detecting a received gesture on a touch-sensitive display, comparing the received gesture to a predefined gesture, if an option to provide gesture feedback is enabled, providing gesture feedback comprising rendering a representation of the predefined gesture on the touch-sensitive display.

According to another aspect, a computer-readable medium has computer-readable code embodied therein that is executable by at least one processor of a portable electronic device to perform the above method.

According to another aspect, a portable electronic device includes a touch-sensitive display configured to display information, and a processor connected to the touch-sensitive display to detect a received gesture on the touch-sensitive display, compare the received gesture to a predefined gesture, if an option to provide gesture feedback is enabled, provide gesture feedback comprising rendering a representation of the predefined gesture on the touch-sensitive display.

### BRIEF DESCRI PTI ON OF THE DRAWINGS

Embodiments of the present disclosure will now be described, by way of example only, with reference to the attached figures, wherein:

FIG. 1 is a simplified block diagram of one example of a portable electronic device in accordance with the present disclosure;

FIG. 2 is a flowchart illustrating an example of a method of providing gesture feedback in accordance with the present disclosure;

FIG. 3 and FIG. 4 illustrate examples of a portable electronic device receiving a gesture and perform ing an associated function;

FIG. 5 and FIG. 6 illustrate examples of a portable electronic device receiving a gesture and providing gesture feedback in accordance with the present disclosure; and

FIG. 7 illustrates an example of a portable electronic device during setting an option to enable gesture feedback.

### DETAI LED DESCRI PTI ON

The following describes an apparatus for and method of providing gesture feedback. The method includes detecting a received gesture on a touch-sensitive display, comparing the received gesture to a predefined gesture, if an option to provide gesture feedback is enabled, providing gesture feedback comprising rendering a representation of the predefined gesture on the touch-sensitive display.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

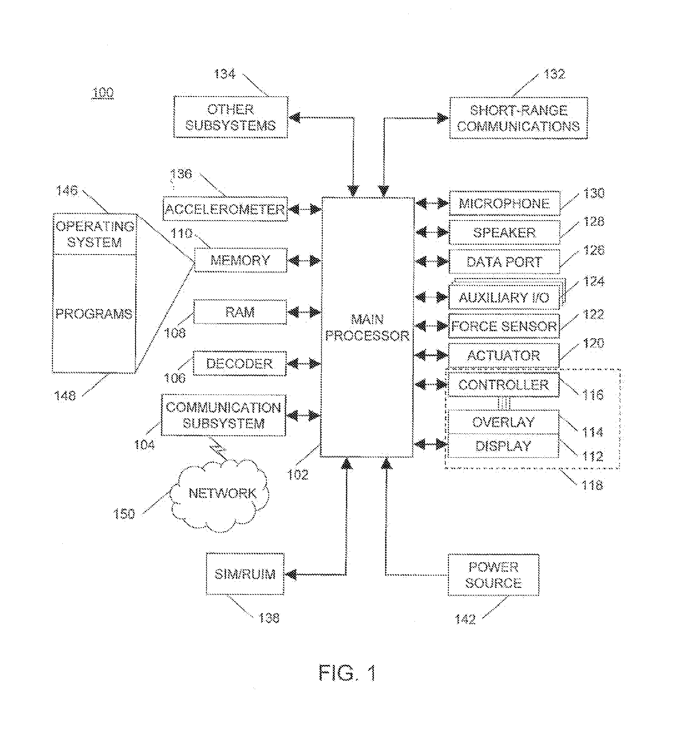

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, an auxiliary input/output (I/O) subsystem 124, a data port 126, a speaker 128, a microphone 130, short-range communications 132, and other device subsystems 134. The processor 102 may optionally interact with one or more actuators 120 and one or more force sensors 122. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The touch-sensitive display 118 is also configured to detect a gesture. A gesture, such as a swipe, is a type of touch, that begins at an origin point and continues to a finishing point while touch contact is maintained. A swipe may be long or short in distance, or duration, or both distance and duration. Two points of the swipe may be utilized to determine a vector that describes a direction of the swipe. The direction may be referenced with respect to the touch-sensitive display 118, the orientation of the information displayed on the touch-sensitive display 118, or another reference. For the purposes of providing a reference, "horizontal" as utilized herein is substantially left-to-right or right-to-left relative to the orientation of the displayed information, and "vertical" as utilized herein is substantially upward or downward relative to the orientation of the displayed information. The origin point and the finishing point of the swipe may be utilized to determine the magnitude or distance of the swipe. The duration of the swipe is determined from the origin point and finishing point of the swipe in time. The processor 102 receives data from the controller 116 to determine the direction, magnitude, and duration of the swipe.

The optional actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

A mechanical dome switch actuator may be utilized. In this example, tactile feedback is provided when the dome collapses due to imparted force and when the dome returns to the rest position after release of the switch.

Alternatively, the actuator 120 may comprise one or more piezoelectric (piezo) actuators that provide tactile feedback for the touch-sensitive display 118. Contraction of the piezo actuator(s) applies a spring-like force, for example, opposing a force externally applied to the touch-sensitive display 118. Each piezo actuator includes a piezoelectric device, such as a piezoelectric disk, adhered to a substrate such as a metal substrate. The substrate bends when the piezoelectric device contracts due to build up of charge/voltage at the piezoelectric device or in response to a force, such as an external force applied to the touch-sensitive display 118. The charge/voltage may be adjusted by varying the applied voltage or current, thereby controlling the force applied by the piezo actuators. The charge/voltage at the piezo actuator may be removed by a controlled discharge current that causes the piezoelectric device to expand, decreasing the force applied by the piezo actuators. The charge/voltage may be removed over a relatively short period of time to provide tactile feedback to the user. Absent an external force and absent a charge/voltage at the piezo actuator, the piezo actuator may be slightly bent due to a mechanical preload.

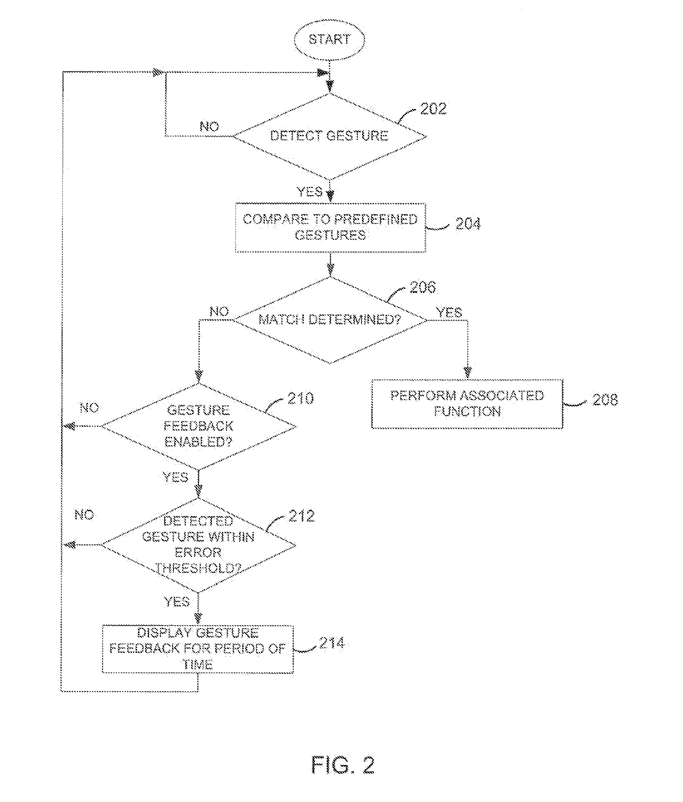

FIG. 2 is a flowchart illustrating an example of a method of providing gesture feedback. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

When a gesture is attempted on the touch-sensitive display, the attempted gesture, also referred to herein as the detected gesture, is detected on the touch-sensitive display at 202. The processor 102 compares the detected gesture to predefined gestures or sets of rules that define gestures at 204. The comparison to predefined gestures at 204 includes a comparison to a set of rules that define the gestures. In the present example, the comparison is a comparison to determine the closest predefined gesture. Predefined gestures include gestures for which data representing the gestures, are stored in memory, such as memory 110. The predefined gestures include gestures that may be utilized to perform associated functions in the application at the time the gesture is detected. Gestures that are not associated with functions in the application at the time the gesture is detected, are not included in the comparison to predefined gestures.

The closest predefined gesture may be determined, for example, by the respective confidence interval of each of the predefined gestures, within which the received gesture falls. The predefined gesture with the highest percentage confidence interval within which the detected gesture falls, is determined to be the closest predefined gesture. The confidence interval may be determined based on any suitable parameter or combination of parameters of the gesture including, for example, the starting point of the gesture, the angle or angles of the gesture, the distance travelled by the gesture, the speed of the gesture, the finishing point of the gesture, and any other suitable parameter.

A determination is made whether or not the detected gesture matches the closest predefined gesture, within an error threshold, or within a threshold confidence interval or limit. For example, a confidence interval of 90% may be set such that when the detected gesture matches the predefined gesture, within the 90% confidence interval, a match is determined and the process continues at 208. The function associated with the matching predefined gesture is performed at 208.

When the detected gesture does not match the predefined gesture, within the set confidence interval, the detected gesture fails to match the predefined gesture and the process continues at 21 0. If a gesture feedback option is set to disable gesture feedback at 210, the process returns to 202. If the gesture feedback option is set to provide gesture feedback at 210, the method proceeds to 212. The gesture feedback option is a selectable option to turn on, or enable, the gesture feedback, or to turn off, or disable, the gesture feedback. The gesture feedback option is provided in any suitable manner for selection by the user. For example, the gesture feedback option may be an option in a menu, a submenu, a selectable feature, icon, or any other suitable selection for setting the gesture feedback option.

A determination is made whether or not the detected gesture matches the closest predefined gesture, within a second error threshold, or within a second threshold confidence interval or limit at 212. For example, a confidence interval of 75% may be set such that when the detected gesture matches the predefined gesture, within the 75% confidence interval, the process continues at 214 where gesture feedback is provided.

The gesture feedback may include any suitable information to provide feedback to the user about the predefined gesture. For example, the gesture feedback may include an indication, such as a trace, of the detected gesture, showing a starting point, a finishing point, and a path of the detected gesture. The gesture feedback may also include an indication, such as a trace, of the predefined gesture, showing the starting point, the finishing point, and the path of the predefined gesture. While a static trace or traces may be utilized, the traces may also be animated to show the progression of the gesture with time and thereby provide an indication of the speed of the predefined gesture and the speed of the detected gesture. Animation of the predefined gesture and the detected gesture may be simultaneous to show the difference in speed between the predefined gesture and the detected gesture. Optionally, the gesture feedback may include a name of the gesture, such as "Zoom", "Pan", "Show Keyboard", "Rotate", "Next", "Previous", or any other suitable name. The gesture feedback may also include an indication of errors in the gesture. For example, text may appear or an indicator may appear on one of the traces, to indicate that the angle, the starting point, the finishing point, the speed, or any other parameter of the detected gesture is incorrect or differs from the predefined gesture.

When the detected gesture fails to match the closest predefined gesture within the second threshold confidence interval or limit, the process returns to 202.

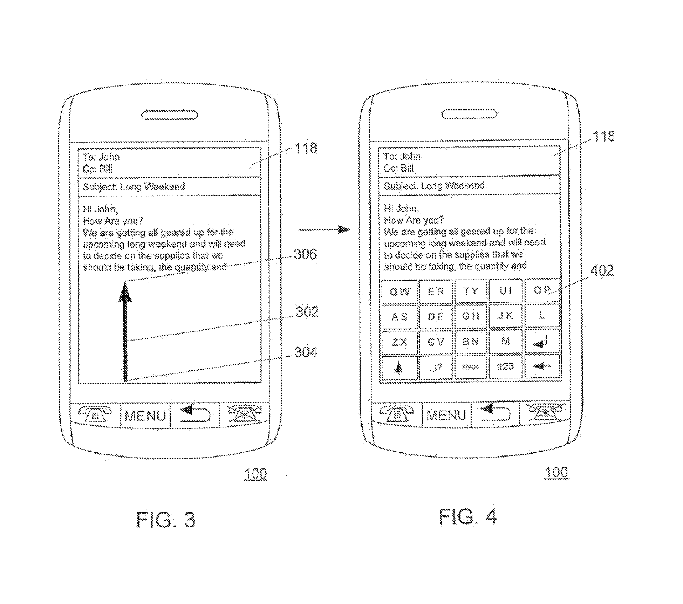

Referring now to FIG. 3 and FIG. 4, examples of a portable electronic device receiving a gesture and performing an associated function are shown. For the purpose of the examples provided herein, an email composition interface is provided in an email application. A gesture is detected at 202. The gesture is not displayed on the touch-sensitive display 118. The gesture is shown for the, purpose of illustration, by the arrow 302 in FIG. 3. The arrow 302 represents the starting point 304, the finishing point 306 and the path of the arrow 302 represents the path of the gesture. The gesture detected at 202 is compared to the predefined gestures 204 and a match is determined at 206. The gesture is associated with a command to provide the virtual keyboard 402 illustrated in FIG. 4 and the keyboard is provided at 208.

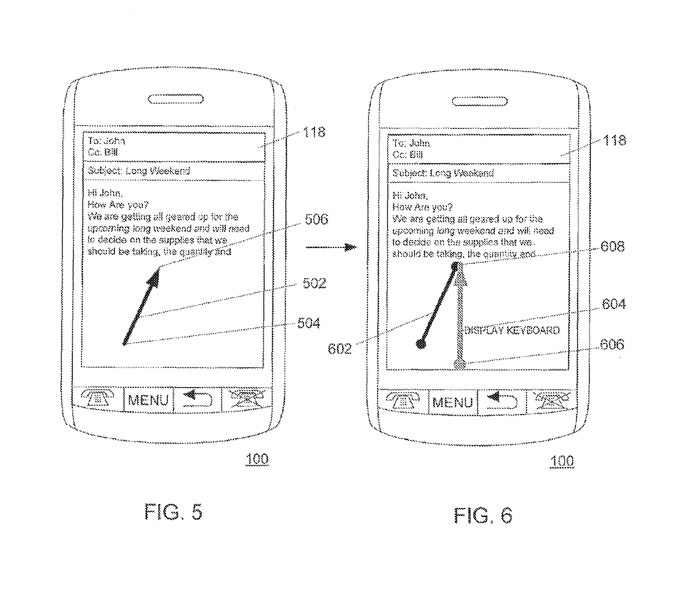

Referring now to FIG. 5 and FIG. 6, examples of a portable electronic device receiving a gesture and providing gesture feedback are shown. In the present example, a gesture is detected at 202. The gesture is shown, for the purpose of illustration, by the arrow 502 in FIG. 5. The arrow 502 represents the starting point 504, finishing point 506 and the path of the arrow 502 represents the path of the gesture. The gesture detected at 202 is compared to the predefined gestures at 204 and the closest predefined gesture is determined to be the gesture associated with the command to provide the virtual keyboard. The gesture detected at 202 does not fall within a first confidence interval of the predefined gesture associated with the command to provide the virtual keyboard and therefore the gesture fails to match the predefined gesture at 206. A determination is made that the gesture feedback is enabled at 210. The detected gesture is determined to fall within a second confidence interval of the predetermined gesture associated with the command to provide the virtual keyboard 402 at 212 and gesture feedback is provided at 214. In the example of FIG. 6, the gesture feedback includes a line 602 displaying the path of the gesture received at the touch-sensitive display 118. An arrow 604 is also displayed, illustrating the path of the predefined gesture, including the starting point 606 and finishing point 608. Additionally, the gesture name "Display Keyboard" is displayed on the touch-sensitive display 118. The gesture feedback is displayed for a period of time of, for example, 3 seconds. Alternatively, the gesture feedback may be displayed until further input is detected at the portable electronic device 100. From the gesture feedback, the correct starting point, finishing point and path of the gesture is provided.

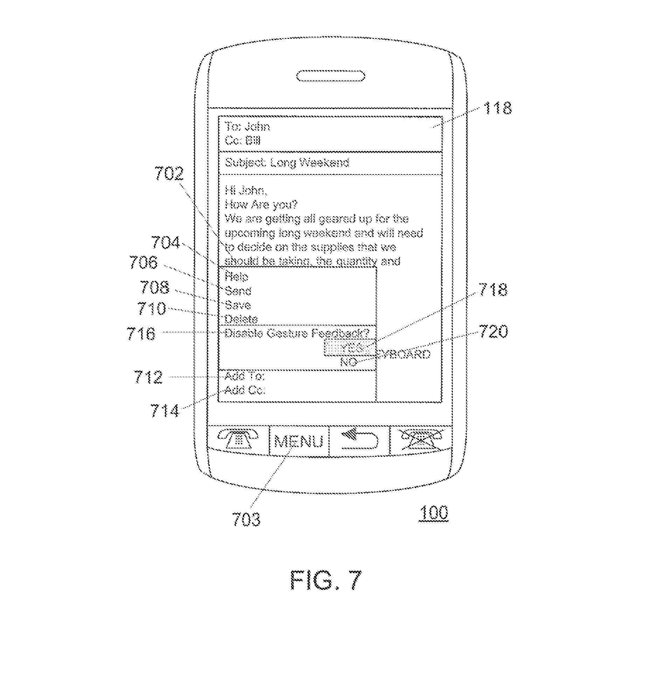

Reference is now made to FIG. 7 to describe an example of a portable electronic device during setting an option to enable gesture feedback. As described, the option to enable gesture feedback, also referred to herein as the gesture feedback option, is provided to enable or disable the gesture feedback. When gesture feedback is disabled, the gesture feedback is not provided. In the example of FIG. 7, the option is provided in a menu 702 that is displayed, for example, in response to selection of a menu key 703. In the present example, the menu 702 includes other suitable selectable features or options, such as a "Help" option 704, a "Send" option 706, a "Save" option 708, a "Delete" option 710, an "Add To:" option 712, and an "Add Cc:" option 714. A "Disable gesture Feedback?" 716 feature is also provided and a selection is set by, for example, depressing the touch-sensitive display 118 at the area associated with the "Yes" option 718 or depressing the touch-sensitive display 118 at the area associated with the "No" option 720. Selection of the "Yes" option results in disabling of the gesture feedback. Selection of the "No" option results in enabling the gesture feedback.

Gesture feedback may therefore be enabled and disabled as desired. Enabling gesture feedback provides feedback to the user during use of the device and facilitates gesture learning and correction. The gesture feedback is selectively provided when the gesture is determined to be outside of a first confidence interval but within a second confidence interval. Gesture feedback is then provided, without performing the function associated with the gesture, to reduce the chance of performing a function that is unwanted by the user, for example, when a gesture is incorrectly entered. Disabling the gesture feedback reduces the number the screens provided, and may be desired, for example, when gestures are known, but incorrectly entered as a result of the conditions during entry. For example, gesture feedback may be undesirable when a user knows the correct gesture but is performing gestures while walking or running. Reducing the number of screens provided may also save on device processing time and may reduce power consumption. Gesture feedback may therefore be selectively provided via the option to enable or disable gesture feedback.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
detecting a received gesture on a touch-sensitive display;
comparing the received gesture to a predefined gesture;
if an option to provide gesture feedback is enabled, providing gesture feedback comprising rendering a representation of the predefined gesture on the touch-sensitive display.

2. The method according to claim 1, wherein the gesture feedback is provided in response to determining that at least one attribute of the received gesture fails to match at least one attribute of the predefined gesture within an error threshold.

3. The method according to claim 1 or 2, wherein the gesture feedback is provided in response to determining that the received gesture fails to match the predefined gesture within an error threshold.

4. The method according to claim 3, wherein the gesture feedback is provided in response to determining that the received gesture matches the predefined gesture within a second error threshold.

5. The method according to claim 3, wherein the error threshold comprises a confidence interval.

6. The method according to any of claims 1 to 5, wherein providing gesture feedback comprises displaying a gesture name.

7. The method according to any of claims 1 to 6, wherein rendering a representation of the predefined gesture comprises rendering a path of the predefined gesture

8. The method according to any of claims 1 to 7, wherein rendering a representation comprises rendering at least one of a starting point and a finishing point of the predefined gesture.

9. The method according to any of claims 1 to 8, comprising discontinuing displaying the representation of the predefined gesture after a predetermined period of time.

10. The method according to any of claims 1 to 9, comprising receiving a setting to enable the option to provide gesture feedback.

11. A computer-readable medium having computer-readable code executable by at least one processor of the portable electronic device to perform the method of any one of claim 1 to 10.

12. A portable electronic device comprising:
a touch-sensitive display configured to display information; and
a processor connected to the touch-sensitive display to:
detect a received gesture on the touch-sensitive display;
compare the received gesture to a predefined gesture; and
if an option to provide gesture feedback is enabled, provide gesture feedback comprising rendering a representation of the predefined gesture on the touch-sensitive display.

## Amended claims

### Amended claims in accordance with Rule 137(2) EPC.

**1.** A method comprising:
detecting (202) a received gesture on a touch-sensitive display (118);
comparing (204) the received gesture to a predefined gesture;
when a selectable option to provide gesture feedback is enabled (210), providing (214) gesture feedback comprising rendering a representation of the predefined gesture on the touch-sensitive display (118)
in response to determining (212) that at least one attribute of the received gesture fails to match at least one attribute of the predefined gesture within an error threshold.

**2.** The method according to claim 1, wherein the gesture feedback is provided in response to determining that the received gesture matches the predefined gesture within a second error threshold.

**3.** The method according to claim 1, wherein the error threshold comprises a confidence internal.

**4.** The method according to any of claims 1 to 3, wherein providing gesture feedback comprises displaying a gesture name.

**5.** The method according to any of claims 1 to 4, wherein rendering a representation of the predefined gesture comprises rendering a path of the predefined gesture.

**6.** The method according to any of claims 1 to 5, wherein rendering a representation comprises rendering at least one of a starting point and a finishing point of the predefined gesture.

**7.** The method according to any of claims 1 to 6, comprising discontinuing displaying the representation of the predefined gesture after a predetermined period of time.

**8.** The method according to any of claims 1 to 7, comprising receiving a setting to enable the option to provide gesture feedback.

**9.** A computer-readable medium having computer-readable code executable by at least one processor (102) of a portable electronic (100) device to perform the method of any one of claims 1 to 8.

**10.** A portable electronic device (100) comprising:
a touch-sensitive display (118) configured to display information; and
a processor (102) connected to the touch-sensitive display (102) to:
detect a received gesture on the touch-sensitive display (118);
compare the received gesture to a predefined gesture; and
when a selectable option to provide gesture feedback is enabled, provide gesture feedback comprising rendering a representation of the predefined gesture on the touch-sensitive display in response to determining that at least one attribute of the received gesture fails to match at least one attribute of the predefined gesture within an error threshold.
